(19) Europäisches Patentamt
European Patent Office
Office européen des brevets

(11) **EP 3 847 221 B1**

(12) **EUROPEAN PATENT SPECIFICATION**

(45) Date of publication and mention of the grant of the patent:
**18.01.2023 Bulletin 2023/03**

(21) Application number: **19783668.7**

(22) Date of filing: **03.09.2019**

(51) International Patent Classification (IPC):
**C09J 123/14** (2006.01)     **C09J 123/20** (2006.01)
**C08L 91/06** (2006.01)

(52) Cooperative Patent Classification (CPC):
(C-Sets available)
**C09J 123/14; C09J 123/20**     (Cont.)

(86) International application number:
**PCT/IB2019/057410**

(87) International publication number:
**WO 2020/049454 (12.03.2020 Gazette 2020/11)**

(54) **HOT MELT ADHESIVE COMPOSITIONS**

SCHMELZHAFTKLEBERZUSAMMENSETZUNGEN

COMPOSITIONS ADHÉSIVES THERMOFUSIBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.09.2018 ZA 201805888**

(43) Date of publication of application:
**14.07.2021 Bulletin 2021/28**

(73) Proprietor: **Sasol South Africa Limited
2196 Johannesburg (ZA)**

(72) Inventors:
• **DE JONGE, Johan, Gerrit, Jan
7315JM Apeldoorn (NL)**
• **RICHARDS, Philip
1947 Vaalpark (ZA)**
• **VERMEULEN, Johannes, Petrus
1947 Sasolburg (ZA)**

(74) Representative: **Hoffmann Eitle
Patent- und Rechtsanwälte PartmbB
Arabellastraße 30
81925 München (DE)**

(56) References cited:
**US-A1- 2018 002 578**

• **Shell MDS (M) Sdn Bhd: "Shell GTL Sarawax SX105", , 1 December 2011 (2011-12-01), XP002795460, Retrieved from the Internet: URL:www.siliconasyquimicos.com/index.php/component/k2/item/download/428_21d79357a4bccfe8c92575e65f185391 [retrieved on 2019-11-06]**

Remarks:
The file contains technical information submitted after the application was filed and not included in this specification

(52) Cooperative Patent Classification (CPC): (Cont.)

C-Sets
**C09J 123/14, C08L 91/06;**
**C09J 123/20, C08L 91/06**

**Description**

*Field of the invention*

The invention relates to hot melt adhesive compositions. The invention provides a polyolefin-based hot melt adhesive composition, particularly for producing nonwoven articles such as nonwoven laminates in particular. The invention also provides a nonwoven laminate produced using, and thus comprising, the composition, methods to produce the composition and the nonwoven laminate, and use of the composition in producing a nonwoven laminate.

*Description of the prior art and object of the invention*

Adhesives are, generally speaking, substances applied to one surface, or both surfaces, of two separate items ("adherends") that bind them together and resist their separation by forming an adhesive bond between the items. Adjectives may be used in conjunction with the word "adhesive" to describe properties based on a particular adhesive's physical or chemical form, the type of materials joined, or conditions under which the adhesive is applied.

Pressure sensitive adhesives (PSA) for example form a bond by the application of light pressure to marry the adhesive with the adherend. They are designed to have a balance between flow and resistance to flow. The bond forms because the adhesive is soft enough to flow to (i.e. to "wet") the adherend. The bond has strength because the adhesive is hard enough to resist flow when stress is applied to the bond. Once the adhesive and the adherend are in close proximity, molecular interactions, such as van der Waals forces, become involved in the bond, contributing significantly to its ultimate strength. PSA are designed for either permanent or removable applications. Examples of permanent applications include safety labels for power equipment, foil tape for heating, ventilation and air conditioning duct work, automotive interior trim assembly, and sound/vibration damping films.

Some high performance permanent PSA exhibit high adhesion values and can support kilograms of weight per square centimeter of contact area, even at elevated temperatures. Permanent PSA may initially be removable (for example to recover mislabeled goods) and build adhesion to a permanent bond after several hours or days.

Hot melt adhesives (HMA) are another type of adhesives and are 100% non-volatile solid thermoplastics. During application a hot melt adhesive is applied to at least one of the substrates to be bonded at an elevated temperature in a molten state preferably in the range of 65 to 180° C, brought into contact with the other substrate(s) and is then solidified upon cooling. Subsequently it forms a strong bond between these substrates. This almost instantaneous bonding makes hot melt adhesives excellent candidates for automated operations. Within these the most common application for hot melt adhesives includes binding of nonwoven constructions, such as nonwoven laminates. A typical hot melt adhesive is composed of base polymer(s), diluent wax(es) or oil(s), tackifier(s), stabilizers and optional filler(s). Ethylene-vinyl acetate-polymer-based hot melts are particularly popular for crafts because of their ease of use and the wide range of common materials they can join. Styrenic block copolymers are commonly employed in hot melt adhesives due to their dual characteristics, i.e. cohesion of the styrenic phase associated with the rubbery behavior of another phase. They are also very resistant to bleed-through on nonwoven materials.

In the last years new types of polyolefin polymers were developed for adhesives which are starting to replace the traditional styrene block copolymers, especially in nonwoven applications. Many different olefinic polymers have been used in the formulation of hot melt adhesives. One of the first was amorphous polypropylene (APP) that could be combined with various tackifiers, plasticizers, waxes and fillers to produce a hot melt adhesive for a variety of end-use applications (e.g. Eastoflex product range from Eastman Chemical Company (Kingsport, Tennessee)). Later olefin polymers became available that had much improved properties over the original APP polymers. These are referred to as amorphous poly alpha olefins (APAO). They are very suitable in the diaper production for example (bonding the nonwoven to polyethylene) but don't possess the level of elevated temperature creep resistance needed for the elastic attachment application and cannot be sprayed well using conventional hot melt application equipment.

APAO can be made using a variety of monomers such as propylene, ethylene and butene or higher olefins up to C10 and a Ziegler-Natta- or metallocene-catalyzed polymerization. They are random polymers having a broad molecular weight distribution and have a very low degree of crystallinity represented by a heat of fusion below 30 J/g.

Unfortunately C4-C10 alpha-olefins can be quite expensive and can also exhibit limited reactivity during the polymerization process. For that reason propylene-ethylene copolymers have been developed, which are semi-crystalline (heat fusion of between 30 to 80 J/g) and contain crystalline polypropylene to increase the hardness and bond strength over time of the copolymers. But their application is limited due the higher softening points or inferior adhesion properties caused by a too high ethylene content.

High melting or softening points of the hot melt adhesives are undesirable in the nonwoven industry as the substrates that would be bonded are very thin and sensitive to high temperatures. Furthermore the above olefinic polymers have not been able to match the characteristics of styrenic block copolymers for nonwoven HMA in terms of ease of sprayability, performance and temperature application window.

Therefore more recently, polyolefins with more precisely tailored properties have been developed. Examples of such properties include a narrower molecular weight distribution or high levels of comonomers such as 1-butene or 1-octene to further reduce the crystallinity and provide low density polymers. On the one hand this could be obtained with olefin block copolymers (OBC) comprising hard (crystalline, low comonomer content) and soft (amorphous, high comonomer content) segments produced by a chain shuttling polymerization (e.g. Infuse product range from Dow Chemical Company (Midland, Michigan)), which gives the polymer much better elevated temperature resistance and elasticity compared to a typical metallocene random polymer of similar density. Or on the other hand amorphous polypropylene homopolymers (e.g. L-Modu product range from Idemitsu Kosan Co., Ltd. (Tokyo, Japan)) which are not crystalline anymore and are produced with specific catalysts, which control the stereoregularity of the polymer and show excellent sprayability and bond strength.

While some of the OBC may have a low heat of fusion (below 30 J/g) they cannot be considered to be amorphous poly-alphaolefins because the polymer structure is completely different (i.e. block vs. random) and is specifically produced to have crystalline regions.

Polypropylene homopolymers are normally isotactic and form high crystalline and rigid structures or atactic, which results in amorphous appearance. With the typical catalysts random-like structures are produced, which are semi-crystalline, but with the above mentioned new catalyst system polypropylene homopolymers with mixed stereochemistry, low crystallinity and soft and elastic properties are obtained.

Suitable commercial propylene polymers are available under a variety of trade designations including, e.g., the VISTAMAXX series of trade designations from ExxonMobil Chemical Company (Houston, Tex.) including VISTAMAXX 8880 propylene-ethylene copolymer, VISTAMAXX 8780 propylene-ethylene copolymer, and VISTAMAXX 8380 propylene-ethylene copolymer, the LICOCENE series of trade designations from Clariant Int. Ltd. (Muttenz, Switzerland) including, e.g., LICOCENE PP 1502 TP, PP 1602 TP, and PP 2602 TP propylene-ethylene copolymers, the AERAFIN series of trade designations from Eastman Chemical Company (Kingsport, Tenn.) including AERAFIN 17 and AERAFIN 180 propylene-ethylene copolymers, the L-MODU series of trade designations from Idemitsu Kosan Co., Ltd (Japan) including L-MODU S-400 polypropylene homopolymer and the KOATTRO series of trade designations from Lyondell-Basell including KOATTRO PB M 1500M polybutene-1-ethylene copolymer.

It is also known to combine different of the above polymer types in hot melt adhesives. Due to their low crystallinity such adhesives generally show a good compatibility and long-term thermal aging performance with plasticizing and tackifying agents commonly used in hot melt formulations. But they also tend to develop properties only slowly after application, leading to long open times that make them unsuitable for construction applications, which require a rapid bonding. In generating laminate structures using porous substrates such as nonwovens, slow set times can lead to over-penetration of the adhesive leading to blocking, equipment fouling and even compromised mechanical performance of the final article. They can also display poor long-term performance and less resistance to flow at body temperature. Over time they also tend to migrate and separate out from the adhesive further affecting the strength and appearance of the adhesive.

Polymer blends which have a higher crystallinity tend to show a poor compatibility and to possess lower tack. Combinations of amorphous and crystalline polymers or semi-crystalline block-copolymers have been used to overcome these issues, but can still show much lower set times. Then higher crystallinity materials such as waxes are often used, but also have significant limitations, tend to have poor compatibility with other adhesive components leading to compromised physical properties and long-term stability issues, can reduce the wet-out and adhesion of the hot melt as well as compromise the mechanical properties such as elongation required for hot melt adhesives employed in elastic constructions such as nonwovens.

Nonwovens are, generally speaking, and included in but not absolutely limiting the meaning of this term of the purpose of the present invention, materials made from sheets or web structures of long fibers, continuous filaments or chopped yarns of any nature or origin, bonded together chemically, mechanically or thermally by entangling fiber or filaments, with the exception of weaving or knitting. The nonwoven can also be formed by a number of different methods, including e.g. airlaid, wetlaid, spunbond or meltblown. The fibers can be carded (e.g. run through a comb) so that they are oriented in a particular direction. The webs can be bonded together in any manner including e.g. hydroentangled, chemical bonded, needle punched or thermally bonded. Felts obtained by wet milling are not nonwovens. Wetlaid webs are nonwovens provided they contain a minimum of 50% of man-made fibres or other fibres of non-vegetable origin with a length to diameter ratio equals or superior to 300, or a minimum of 30% of man-made fibres with a length to diameter ratio equals or superior to 600, and a maximum apparent density of 0.40 g/cm$^3$. Composite structures are considered nonwovens provided their mass is constituted of at least 50% of nonwoven as per to the above definitions, or if the nonwoven component plays a prevalent role. The nonwoven can contain fibers made from one or more polymers (e.g. PET (polyethylene terephthalate), PBT (polybutylene terphthalate), polyamide, polypropylene and polyethylene, one or more natural fibers (e.g. rayon cellulose, cotton cellulose, hemp and viscose) or combinations thereof. The nonwoven material can be self-elastic. This is accomplished by incorporation of elastic fibers into the nonwoven or by incorporating absorbed elastic material to improve elasticity. Hot melt adhesives described herein, including the composition of the invention, can be used in conjunction with elastic nonwoven to augment the elastic performance of the composite. Alternatively one of the substrates can be nonwoven and the other can be a polymer film. Any polymer film can be used.

The polymer film can be selected from the group consisting of polyethylene, polypropylene, polyethylene copolymers, polypropylene copolymers, and PET.

As the typical application temperature of hot melt adhesives is between 150 and 200° C and the above nonwoven films are heat sensitive, a direct contact between the substrate and the adhesive applying nozzle needs to be avoided. Therefore the adhesive is in such cases often applied by spray coating with the aid of compressed air onto the substrate from a distance.

In fabricated articles of nonwovens hot melt adhesives bond the nonwoven material with polymeric films and elastomeric components. Laminated structures using hot melt adhesives to bond nonwoven materials and elastomeric components in the form of strands, films or any other continuous or discrete forms are especially useful in hygiene products like disposable absorbent articles such as diapers, feminine hygiene articles, adult incontinence devices, underpads, bed pads, industrial pads and the like.

The bonding mainly refers to the application of a liquid based bonding agent to the nonwoven web. Three groups of materials are commonly used as binders, these being acrylate polymers and copolymers, styrene-butadiene copolymers, and vinyl acetate ethylene copolymers. Water based binder systems are the most widely used but powdered adhesives, foam and in some cases organic solvent solutions are also found.

There are many ways of applying the binder. It can be applied uniformly by impregnating, coating or spraying or intermittently, as in print bonding. Print bonding is used when specific patterns are required and where it is necessary to have the majority of fibres free of binder for functional reasons.

For the application of hot melt adhesives in nonwovens such as diapers, the adhesive must immediately build strength so that it will hold the article together even though there are forces acting on the adhesive bond, e.g. elastic strands of the diaper. The adhesive must be able to resist the contractive force of the elastic strands. It is also important that the adhesive doesn't bleed-through the nonwoven.

Otherwise the adhesive can build on rollers or compression sections of the diaper line. A balance between a relatively low viscosity of the adhesive for ease of application, fast development of internal strength to hold the substrates together immediately after being applied and resistance to bleed-through must be achieved.

Laminates or laminated constructions are multilayered, thermoplastic polymer films, which are produced by pressing or melting at least two layers of the same or different polymer materials. In this specification laminated constructions include, in particular, at least one nonwoven layer to which at least one other layer has been bonded by means of an adhesive, such as the adhesive composition of the invention, wherein the at least one other layer may comprise a nonwoven, a polymer material, or combinations thereof.

Suitable classes of tackifying agents include, aromatic, aliphatic and cycloaliphatic hydrocarbon resins, mixed aromatic and aliphatic modified hydrocarbon resins, aromatic modified aliphatic hydrocarbon resins, and hydrogenated versions thereof; terpenes, modified terpenes and hydrogenated versions thereof; natural rosins, modified rosins, rosin esters, and hydrogenated versions thereof; low molecular weight polylactic acid; and combinations thereof.

Useful tackifying agents are commercially available under a variety of trade designations including, e.g., the ESCOREZ series of trade designations from ExxonMobil Chemical Company (Houston, Tex.) including, e.g. ESCOREZ 1310LC, ESCOREZ 5400, ESCOREZ 5637, ESCOREZ 5415; ESCOREZ 5600, ESCOREZ 5615. And ESCOREZ 5690, the EASTOTAC series of trade designations from Eastman Chemical Company (Kingsport, Tenn.) including, e.g., EASTOTAC H-100R, EASTOTAC H-100L, and EASTOTAC H130W, the WINGTACK series of trade designations from Cray Valley HSC (Exton, Pa.) including, e.g., WINGTACK 86, WINGTACK EXTRA, and WINGTACK 95, the PICCOTAC series of trade designations from Eastman Chemical Company (Kingsport, Tenn.) including, e.g., PICCOTAC 8095 and 1115, the ARKON series of trade designations from Arkawa Europe GmbH (Germany) including, e.g., ARKON P-125, the REGALITE and REGALREZ series of trade designations from Eastman Chemical Company including, e.g., REGALITE RI 125 and REGALREZ 1126, and the RESINALL series of trade designations from Resinall Corp (Severn, N.C.) including RESINALL R1030.

The hot melt adhesive can further contain plasticizers such as processing oils. Processing oils can include, for example, mineral oils, naphthenic oils, paraffinic oils, aromatic oils, castor oils, rape seed oil, triglyceride oils, or combinations thereof. As one skilled in the art would appreciate, processing oils may also include extender oils, which are commonly used in adhesives. The use of oils in the adhesives may be desirable if the adhesive is to be used as a pressure-sensitive adhesive to produce tapes or labels or as an adhesive to adhere nonwoven articles. In certain embodiments, the adhesive may not comprise any processing oils.

Further additives, such as antioxidants, stabilizer, plasticizer, adhesion promoters, ultraviolet light stabilizers, rheology modifiers, corrosion inhibitors, colorants (e.g. pigments and dyes), flame retardants, nucleating agents or filler such as carbon black, calcium carbonate, titanium oxide, zinc oxide, or combinations thereof may also be present.

Useful antioxidants include, e.g. pentaerythritol tetrakis [3, (3,5-di-tert-butyl-4-hydroxyphenyl)propionate], 2,2'-methylene bis(4-methyl-6-tert-butylphenol), phosphites including, e.g. tris-(p-nonylphenyl)-phosphite (TNPP) and bis(2,4-di-tert-butylphenyl)4,4'-diphenylene-diphosphonite, di-stearyl-3,3'-thiodipropionate (DST-DP), and combinations thereof. Useful antioxidants are commercially available under a variety of trade designations including, e.g., the IRGANOX series of trade designations including, e.g., IRGANOX 1010, IRGANOX 565, and IRGANOX 1076 hindered phenolic antioxidants, and IRGAFOS 168 phosphite antioxidant, all of which are available from BASF Corporation (Florham Park, N.J.), and ETHYL 702 4,4'-methylene bis(2,6-di-tert-butylphenol), which is available from Albemarle Corporation (Baton Rouge, Louisiana).

Waxes can be used as nucleating agents, diluents or viscosity reducers in hot melt adhesives.

As nucleating agents waxes improve the elongation at break of the polymer material in a HMA. As diluent waxes promote the wetting and reduce the (melt) viscosity of the adhesive formulation, which allows to reduce the cost and to control the speed of application of the adhesive. From the viewpoint of the improvement of the flexibility and also the improvement of the wettability due to a decrease in the viscosity, the content of the wax is decisive.

Waxes in general are mostly defined as chemical compositions, which have a drop melting point above 40° C, are polishable under slight pressure, are knead-able or hard to brittle and transparent to opaque at 20° C, melt above 40° C without decomposition, and typically melt between 50 and 90° C with exceptional cases up to 200° C, form pastes or gels and are poor conductors of heat and electricity.

Waxes can be classified according to various criteria such as e.g. their origin. Here, waxes can be divided into two main groups: natural and synthetic waxes. Natural waxes can further be divided into fossil waxes (e.g. petroleum waxes) and nonfossil waxes (e.g. animal and vegetable waxes). Petroleum waxes are divided into macrocrystalline waxes (paraffin waxes) and microcrystalline waxes (microwaxes). Synthetic waxes can be divided into partially synthetic waxes (e.g. amide waxes) and fully synthetic waxes (e.g. polyolefin- and Fischer-Tropsch waxes).

Paraffin waxes originate from petroleum sources. They are clear, odor free and can be refined for food contact. They contain a range of (primarily) n-alkanes and iso-alkanes as well as some cyclo-alkanes. Raw or crude paraffin waxes (slack waxes) have a great number of short-chained alkanes ("oils"), which are removed when further refined. Different distributions and qualities of paraffin waxes can be obtained. Refining may include deoiling, distillation and hydrogenation.

Synthetic Fischer-Tropsch waxes or hydrocarbons originating from the catalyzed Fischer-Tropsch synthesis of syngas (CO and $H_2$) to alkanes contain predominantly n-alkanes, a low number of branched alkanes and basically no cyclo-alkanes or impurities like e.g. sulfur or nitrogen. In return the number of olefins and oxygenates (i.e. oxidized hydrocarbons such as alcohols, esters, ketones and/or aldehydes) may be higher and different to petroleum based waxes.

Fischer-Tropsch waxes can generally be classified in low melting (congealing point of 20 to 45 °C), medium melting (congealing point of 45 °C to 70° C) and high-melting (congealing point of 70 to 105 °C).

Another source for synthetic waxes are products obtained from the oligomerization/ polymerization of olefinic monomers, possibly followed by hydrogenation.

Hydrocarbon waxes are waxes according to the above definition comprising predominantly hydrocarbons. Hydrocarbons are molecules that exclusively consist of carbon and hydrogen atoms. If not otherwise mentioned n- or linear refers to a linear and aliphatic and i-, iso- or branched stands for branched and aliphatic.

US 20080081868 discloses adhesives comprising a copolymer comprising at least 80 wt.-% of units derived from propylene and from 1 to 20 wt.-% of units derived from at least one C6 to C10 alpha-olefin, wherein the adhesive may comprise 80 wt.-% of the above amorphous or semi-crystalline polymer and 20 wt.-% of at least one wax and functionalized polyolefin, such as a Fischer-Tropsch wax with a congealing point between 80 to 85° C (C80 from Sasol) and maleic acid anhydride modified polypropylene. These adhesives show improved set times, viscosities and peel strengths as well as adhesive properties, including a good low temperature adhesion performance at -18° C and a high toughness.

US 8431642 discloses HMA for packaging applications with a polyolefin comprising at least 50 mol-% of a polypropylene and at least one wax, which includes a linear polyethylene wax having a molecular weight equal to or greater than 3000. A Fischer-Tropsch wax with a congealing point of 80° C (Sasolwax C80) is mentioned as further additive, but the document teaches away from using it in the claimed polymer composition as it provides worse set times than the disclosed polyethylene waxes.

US 20150225622 discloses adhesives with polypropylene-ethylene-copolymers with a softening point in the range of 90 to 115° C and optionally a wax such as a Fischer-Tropsch wax (e.g. H1 from Sasol) when the hot melt is to be used for packaging applications.

US 9334431 discloses hot melt adhesives for use on porous substrates comprising 10-70 wt.-% of a polypropylene homopolymere, 10-60 wt.-% of a first and 0-65 wt.-% of a second tackifier, 5-50 wt.-% of a plasticizer, 0.1-5 wt.-% of a stabilizer or antioxidant and 1-40 wt.-% of a wax with an enthalpy of fusion of greater than 30 J/g. Mentioned waxes are paraffin waxes, such as one with a softening point of 66° C and a melt enthalpy of 187 J/g. Hot melts comprising such low-modulus polypropylene homopolymer alone have much too slow setting times and a high tendency for bleed through. The wax increases the set speed and can stop the bleed-through by its own recrystallization or nucleate the polymer to crystallize faster. It can also bloom to the surface to prevent sticking to the substrate.

WO 2016153663 discloses hot melt adhesives with specific polypropylene-polyethylene copolmyers, polypropylene-alpha-olefine copolymers or polypropylene, tackifier and optionally a wax or plasticizer. The copolymers have a melting point of less than 90° C.

In US 20160130480 a hot melt adhesive composition is disclosed that includes at least 40 wt.-% of an unmodified, semi-crystalline propylene polymer comprising at least 50 wt.-% polypropylene and at least 15 wt.-% of a combination of two unmodified waxes including a Fischer-Tropsch wax.

US 20180002578 discloses a hot melt adhesive composition that comprises at least 35 wt.-% of polymer mixture of a propylene polymer and an ethylene-alpha-olefin copolymer and from 18 to 37 wt.-% of a wax component with a melting point greater than 80° C and a heat of fusion of at least 200 J/g.

In adhesives for nonwovens comprising polyolefin-based polymers an ideal balance between hardness and softening point needs to be found to produce adhesives with improved characteristics therefrom. Furthermore there is a constant drive to improve the HMA with regard to lowering cost or improving product performance, e.g. low temperature utility, increasing speed of application, lowering application temperature, lowering coating weight, increasing tack and so on.

Therefore there exists a need for polyolefin-based hot melt adhesive formulations for nonwovens that display a rapid set time, a good balance of mechanical properties and excellent long-term aging performance, don't show any adverse effects on adhesive aging, odor, color, blocking or spray pattern and have a superior low temperature sprayability, high peel strength and no bleed-through effect on the nonwoven material.

The sprayability and spray pattern can be observed by staining a nonwoven article, to which a hot melt adhesive was applied, with iodine by putting it into an enclosed chamber for 24 hours in the presence of iodine crystals. The nonwoven article will change its color and the areas where the adhesive has been applied and its pattern become visible.

The peel strength can be determined at the adhered nonwoven laminate article with the 300mm/min T-peel test according to ASTM D 1876.

The odor of the adhesive formulation can be tested by enclosing one gram of an adhesive sample in a container at 40°C for 24 hours and let different individual human subjects independently smell when the container is opened.

Aging can be determined by heating a small sample of adhesive in an oven at 170°C with exposure to atmosphere for 72 hours and visually checking the color. A good age resistance exists if the color of the sample has not changed during this treatment. The blocking can be measured by stacking three $100 \times 100$ mm samples of each laminate on top of each other in between glass plates in an oven at 50° C with a pressure of 1 kg on top of them for 24 hours. If no blocking occurs the three samples can be removed easily and separately from in between the glass plates after this treatment.

Another suitable test for characterizing hot melt adhesives is the dynamic mechanical analysis (abbreviated DMA, also known as dynamic mechanical spectroscopy). It is a technique used to study and characterize materials, especially the viscoelastic behavior of polymers. A sinusoidal stress is applied and the strain in the material is measured, allowing one to determine the storage modulus. The temperature of the sample or the frequency of the stress are often varied, leading to variations in the storage modulus; this approach can be used to locate the glass transition temperature of the material, as well as to identify transitions corresponding to other molecular motions.

In purely elastic materials the stress and strain occur in phase, so that the response of one occurs simultaneously with the other. In purely viscous materials, there is a phase difference between stress and strain, where strain lags stress by a 90 degree ($\pi/2$ radian) phase lag. Viscoelastic materials exhibit behavior somewhere in between that of purely viscous and purely elastic materials, exhibiting some phase lag in strain.

Stress and strain in a viscoelastic material can be represented using the following expressions:

Strain:

$$\varepsilon = \varepsilon_0 \sin(\omega t)$$

Stress:

$$\sigma = \sigma_0 \sin(\omega t + \delta)$$

where

$\omega = 2 \pi f$ where f is frequency of strain oscillation, t is time, $\delta$ is phase lag between stress and strain.

The storage and loss modulus in viscoelastic materials measure the stored energy, representing the elastic portion, and the energy dissipated as heat, representing the viscous portion. The tensile storage and loss moduli are defined as follows:

Storage:

$$E' = (\sigma_0 / \varepsilon_0) \cos\delta$$

Loss:

$$E'' = (\sigma_0 / \varepsilon_0) \sin\delta$$

Similarly the shear storage and shear loss moduli G' and G" are defined. G' reflects the stability of the material to recover from deformation or retain energy and it is therefore an indication of stiffness/elasticity of the material. G" reflects the ability of the material to dissipate energy.

The ratio between the loss and storage modulus in a viscoelastic material is defined as the tan $\delta$ (tan delta), which provides a measure of dampening in the material. Tan delta can also be visualized in vector space as the tangent of the phase angle between the storage and loss modulus.

Tensile:

$$\tan\delta = E'' / E'$$

Shear:

$$\tan\delta = G'' / G'$$

For example, a material with a tan delta greater than one will exhibit more dampening than a material with a tan delta less than one, i.e. the material is more viscous than elastic. The reason that a material with a tan delta greater than one shows more dampening is because the loss modulus of the material is greater than the storage modulus, which means the energy dissipating, viscous component of the complex modulus dominates the material behavior. The cross over point, where the tan delta is equal to 1 indicates the temperature at which the material starts to flow or where crystallisation/gelation starts to take place. The temperature at this cross over point also gives a suitable indication for the low temperature sprayability of the material.

*Summary of the invention*

According to one aspect of the invention, the above requirements can surprisingly be achieved with a polyolefin-based hot melt adhesive composition comprising:

- 20 to 80 wt.-% of at least one polyolefin polymer,
- 2 to 20 wt.-% of at least one hydrocarbon wax, and
- optionally an antioxidant,

wherein the hydrocarbon wax

- has a congealing point in a range of 75 to 110° C;
- has a heat of fusion determined with differential scanning calorimetry of 200 to 235 J/g;
- is a synthetic Fischer-Tropsch wax.

The composition may, in particular, be a composition for use in producing nonwoven constructions, e.g. nonwoven laminates.

The adhesive composition would typically have a shear tan delta (G" / G') in the dynamic mechanical analysis is that is equal to 1 in the range of 60° C to 100° C, preferably 65° C to 85°C.

Thus, the hot melt adhesive composition preferably is would be sprayable at a temperature equal to or below 160° C, more preferably between 130° C and 160° C and most preferably in a range of 135° C to 145° C.

The inventive selection of hydrocarbon wax and polymer provides a superior hot melt adhesive for the use in producing nonwoven constructions, having an excellent low temperature sprayability and high peel strength, which may reduce the coating weight required for the use of the hot melt adhesive composition.

Synthetic Fischer-Tropsch waxes are obtained by the Fischer-Tropsch synthesis and are according to the invention preferably defined as hydrocarbons originating from the Cobalt- or Iron-catalyzed Fischer-Tropsch synthesis of syngas (CO and $H_2$) to alkanes. The crude product of this synthesis is separated into liquid and different solid fractions by distillation. The hydrocarbons contain predominantly n-alkanes, a low number of branched alkanes and basically no cyclo-alkanes or impurities like e.g. sulfur or nitrogen.

Fischer-Tropsch waxes consist of methylene units and their carbon chain length distribution is according to one embodiment characterized by an evenly increasing and decreasing number of molecules for the particular carbon atom chain lengths involved. This can be seen in gas chromatography-analyses of the wax.

Fischer-Tropsch waxes preferably have a content of branched hydrocarbons between 10 and 25 wt.-%. The branched molecules of the Fischer-Tropsch wax more preferably contain more than 10 wt.-%, most preferably more than 25 wt.-% molecules with methyl branches. Furthermore, the branched molecules of the Fischer-Tropsch wax preferably contain no quaternary carbon atoms. This can be seen in NMR-measurements of the wax.

In preferred embodiments of the invention the hydrocarbon wax has a molecular mass (number average) between 500 and 1200 g·mol$^{-1}$, more preferred between 600 and 1000 g·mol$^{-1}$.

In preferred embodiments the hydrocarbon wax additionally has independent of each other one or more of the following properties:

- a Brookfield viscosity at 135°C of below 20 mPa·s;
- a penetration at 25° C of below 10 1/10 mm;
- the hydrocarbon wax is hydrotreated; and
- an oil content below 1 wt.-%.

Without being bound to this theory, it is believed that in these ranges the hydrocarbon wax provides optimally performing polyolefin-based hot melt adhesives for nonwovens in accordance with the invention.

In preferred embodiments of the invention the hot melt adhesive composition comprises the hydrocarbon wax in an amount of 2 to 18 wt.-%, more preferred 2 to 15 wt.-% and most preferred 5 to 10 wt.-%.

In preferred embodiments of the invention the adhesive composition has one or more of the following properties independent of each other:

- a T-peel strength, which is at least 10%, preferably 20%, higher compared to the same hot melt adhesive composition without the hydrocarbon wax and/or with a hydrocarbon wax not according to the invention;
- an increase of the storage modulus (G') in a dynamic mechanical analysis with a frequency of 10 Hz at a cooling rate of 2° C/min of more than 10 MPa, preferably more than 50 MPa, within 10° C at a point above 60° C, preferably between 70 and 60° C;
- an increase of the storage modulus (G') in a dynamic mechanical analysis with a frequency of 10 Hz at a cooling rate of 2° C/min of more than 500 MPa between 40° C and 100° C; and
- a Brookfield viscosity at 160° C below 5000 mPa·s.

Furthermore the composition may comprise a tackifier, preferably in an amount of 10 to 60 wt.-%, more preferably 10 to 50 wt.-%, and/or a processing oil, preferably in an amount of 5 to 20 wt.-%, more preferably 5 to 15 wt.-%.

The tackifying agent may be selected from aromatic, aliphatic and cycloaliphatic hydrocarbon resins, mixed aromatic and aliphatic modified hydrocarbon resins, aromatic modified aliphatic hydrocarbon resins, and hydrogenated versions thereof; terpenes, modified terpenes and hydrogenated versions thereof; natural rosins, modified rosins, rosin esters, and hydrogenated versions thereof; low molecular weight polylactic acid; and combinations thereof.

The processing oil may be selected, for example, from mineral oils, naphthenic oils, paraffinic oils, aromatic oils, castor oils, rape seed oil, triglyceride oils, or combinations thereof. As one skilled in the art would appreciate, processing oils may also include extender oils, which are commonly used in adhesives.

Optionally an antioxidant may present. Typically, it may be present in an amount of 0.1 to 2 wt.-%.

The polyolefin polymer in the adhesive composition may be selected from amorphous poly-alpha-olefin copolymers (APAO), polypropylene homopolymers or polybutene homopolymers, preferably from the group of ethylene-propylene copolymers or ethylene-butene copolymers, more preferably with an ethylene-content of 0 to 50 wt.-%, preferably 5 to 37.5 wt.-%, more preferably 7 to 35 wt.-% and most preferably 10 to 25 wt.-%.

Preferably a mixture of two of these polymers or only one of these polymers is used in the adhesive composition and/or the amount of the polymer is 35 to 60 wt.-%.

In preferred embodiments of the invention the polyolefin polymer additionally has one or more of the following properties independent of each other:

- a Brookfield viscosity at 190° C between 1000 to 50000 mPa·s, preferably 1500 to 20000 mPa·s;
- a ring & ball softening point between 90 to 130° C;
- a heat of fusion determined with differential scanning calorimetry of less than 30 J/g; and
- a density of 0.8 to 0.9 g·cm$^{-3}$.

In a further aspect of the invention is provided a method to produce a hot melt adhesive composition according to the invention, the method comprising mixing, in a molten state, at least one polyolefin polymer, at least one hydrocarbon wax and, optionally, one or more of a tackifier, a processing oil and/or an antioxidant with each other in a heated mixer until they are homogenous.

The homogenous mixture may provide the hot melt adhesive composition.

The method may include providing, as components, the at least one polyolefin polymer, at least one hydrocarbon wax and optionally the tackifier, the processing oil and/or the antioxidant.

The at least one polyolefin polymer, at least one hydrocarbon wax, the tackifier, the processing oil and/or the antioxidant and their relative proportions may be as hereinbefore described.

The method may further include transferring the hot melt adhesive composition in a container for cooling and solidifying.

The invention provides in a further aspect a nonwoven laminate produced using, and thus comprising the hot melt adhesive composition of the invention.

The laminate may comprise at least one nonwoven layer or at least one nonwoven layer and one polymer layer, which preferably is made from polyethylene.

The invention also provides in a further aspect thereof a method to produce a nonwoven laminate comprising at least the following steps:

- spray-coating at least one nonwoven layer with the hot melt adhesive composition according to the invention; and
- providing at least a second nonwoven or polyethylene layer, which is arranged on top of the coated layer, and pressing the layers together.

Pressing the layers together may produce the nonwoven laminate.

The spray-coating may be performed at a temperature of 120 to 160° C, preferably with a spiral pattern, with a coating weight of between 1 to 4 g/m$^2$, preferably 2 g/m$^2$, a nozzle air pressure of 0.005 to 0.05 MPa and a machine speed of between 1 to 4 m/min or 4 to 600 m/min.

The method may include providing at least one nonwoven layer on a conveyor belt.

Pressing the layers together may include feeding the first and second layers between two rollers, preferably pneumatic rollers, thus pressing the layers together.

The method may also include reeling the nonwoven laminate on a role for cooling and storing.

The nonwoven laminate preferably comprises more than one nonwoven layer or at least one nonwoven layer and at least one polymer layer, more preferably made from polyethylene.

The spray-coating may preferably be performed at a temperature of 130° C to 160° C and more preferably of 135° C to 145° C.

The invention also includes, as a further aspect thereof, the use of the hot melt adhesive composition according to the invention to adhere nonwoven laminates.

The nonwoven laminates may have a T-peel strength which is at least 10%, preferably 20%, higher compared to the use of a same hot melt adhesive composition without the hydrocarbon wax and/or with a hydrocarbon wax not according to the invention.

All congealing points mentioned herein have been measured according to ASTM D 938 and all ring and ball softening points for the polymers according to ASTM E 28.

The Brookfield viscosity of the polymers at 190° C, for the hot melt adhesive formulation at 140° C and 160° C and for the hydrocarbon waxes at 135° C has been measured according to ASTM D 3236 with spindle 27. The viscosity for the hydrocarbon waxes with a value far below 15 mPa·s has been measured according to ASTM D 445.

The needle penetration at 25° C has been measured according to ASTM D 1321, the penetration of the polymers according to ASTM D 5 or ASTM D 2240 (durometer hardness), the glass transition point (Tg) of the polymers according to ASTM D 3418 and the oil content of the hydrocarbon waxes according to ASTM D 721.

The molar mass (number average) and the iso-alkane content of the hydrocarbon waxes was determined by gas chromatography according to EWF Method 001/03 of the European Wax Federation.

The heat of fusion determined with differential scanning calorimetry was measured according to ASTM E 793

The T-peel strength has been measured based on ASTM D 1876.

*Examples*

Different polymers (see table 1) and hydrocarbon waxes (see table 2) have been used to prepare a variety of hot melt adhesive compositions (hereinafter from time to time referred to as "formulations") (see tables 3, 4, 5 and 6) by melt blending.

In a first step the polymer and the antioxidant were loaded to a sigma mixer heated at 110-120° C and mixed for 30 to 40 minutes with 15 Hz until the polymer was completely molten and the antioxidant homogenously mixed into the polymer.

In a second step the resin, the wax and optionally the oil were added in sequence to the mixer at 120-130° C, and mixed until they are homogenous (ca. 15 minutes). In a third step the mixture was degased in a vacuum and a temperature of 120-130° C for 40 to 60 minutes.

In a last step the mixture was transferred into a container, cooled down and solidified.

In the tables below, the products used were the following:

- Aerafin™ 180 produced by Eastman, Kingsport, Tennessee, USA
- Aerafin™ 17 produced by Eastman, Kingsport, Tennessee, USA
- Regalite™ R1090 produced by Eastman, Kingsport, Tennessee, USA
- Koattro™ PB M 1500M produced by LyndonellBasell, Houston, Texas, USA
- Vistamaxx™ 8780 produced by ExxonMobil, Irving, Texas, USA
- Vistamaxx™ 8380 produced by ExxonMobil, Irving, Texas, USA
- SASOLWAX™ 6705 produced by Sasol, Wax, Hamburg, Germany
- SASOLWAX™ 6805 produced by Sasol, Wax, Hamburg, Germany
- SERATION™ 1830 produced by Sasol, Sandton, Gauteng, South Africa
- SERATION™ 1820 produced by Sasol, Sandton, Gauteng, South Africa
- SERATION™ 1810 produced by Sasol, Sandton, Gauteng, South Africa
- Nyflex™ 222B produced by Nynas, Stockholm, Sweden
- Nyflex™ 3100 produced by Nynas, Stockholm, Sweden
- CWP 400 produced by Trecora Chemical, Pasadena, TX 77507, USA

The compositions identified in tables 3, 4, 5 and 6 are all inventive, except for compositions 1, 4, 8, 9 and 16, which are comparative compositions as confirmed by the qualification "comp". More specifically, compositions 1, 4, 9 and 16 are hot melt adhesive compositions comprising a paraffin wax and composition 8 is one comprising a polyethylene wax, which are all not according to the invention.

**Table 1:** Data of used polymers

|  | Aerafin 180 | Aerafin 17 | Koattro PB M 1500M | Vistamaxx 8780 | Vistamaxx 8380 |
|---|---|---|---|---|---|
| Brookfield viscosity @190° C [mPa·s] ASTM D 3236 | 18000 | 1700 | 5600 | 3980 | 7570 |
| R&B softening point [°C] ASTM E 28 | 125 | 130 | n.d. | 96 | 100 |
| Density [g·cm$^{-3}$] | 0.86 | 0.86 | 0.89 | 0.864 | 0.864 |
| Ethylene-content [%] | 16-21% | 16-21% | n.d. | 12 wt.-% | 12 wt.-% |
| Penetration [dmm] ASTM D 5 | 25 | 20 | n.d. | 17 ASTM D 2240 | 18 ASTM D 2240 |
| Tg [°C] ASTM D 3418 | -38 | -38 | -30 | -32 | -31 |
| Heat of fusion [J/g] ASTM E 793 | 10.6 | n.d. | n.d. | n.d. | n.d. |

**Table 2:** Data of used hydrocarbon waxes

| | SASOLWAX 6705 | SASOLWAX 6805 | PE-wax CWP 400 | SERATION 1830 | SERATION 1820 | SERATION 1810 |
|---|---|---|---|---|---|---|
| Congealing point [°C] ASTM D 938 | 64 | 67 | 105 | 83 | 97 | 102 |
| Kinematic viscosity @100 °C ASTM D 445 | 6.1 | 6.4 | Brookfield @170° C 42 mPa·s | 9.4 Brookfield @135°C 4 mPa·s | Brookfield @135°C 8 mPa·s | @120°C 22.3 Brookfield @135° C 13 mPa·s |
| Density [g·cm⁻³] | 0.789 | 0.771 | n.d. | 0.771 | n.d. | n.d. |
| Penetration @25°C [1/10 mm] ASTM D 1321 | 18 | 17 | 1 | 7 | 1 | 1 |
| Oil content [%] ASTM D 721 | 0.15 | 0.65 | n.a. | 0.5 | 0.8 | <0.2 |
| Molar mass (number average) [g·mol⁻¹] | 470 | 500 | 552 | 600 | 780 | 900 |
| Iso-alkanes [%] | 43.9 | 43.3 | n.d. | 12.4 | 5.7 | 10 |
| Heat of fusion [J/g] ASTM E 793 | 193 | 188 | n.d. | 217 | 219 | 219 |

**Table 3:** Composition of hot melt adhesives with Aerafin 180 and Aerafin 17

| Formulation | 1 comp. | 2 | 3 | 4 comp. | 5 | 6 | 7 | 8 comp. | 9 comp. | 10 | 11 |
|---|---|---|---|---|---|---|---|---|---|---|---|
| Aerafin 180 | 35 | 35 | 35 | 35 | 35 | 35 | 35 | 35 | 18 | 18 | 18 |
| Aerafin 17 | | | | | | | | | 42 | 42 | 42 |
| Regalite R1090 | 46.5 | 46.5 | 46.5 | 46.5 | 46.5 | 46.5 | 46.5 | 46.5 | 30 | 30 | 30 |
| Nyflex 222B | 10.5 | 10.5 | 10.5 | | | | | | | | |
| Nyflex 3100 | | | | 10.5 | 10.5 | 10.5 | 10.5 | 10.5 | | | |
| Antioxidant | 1 | 1 | 1 | 1 | 1 | 1 | 1 | 1 | 0.2 | 0.2 | 0.2 |
| SASOLWAX6705 | 7 | | | | | | | | | | |
| SASOLWAX6805 | | | | 7 | | | | | 9.8 | | |
| SERATION 1830 | | | | | 7 | | | | | | |
| SERATION 1820 | | 7 | | | | 7 | | | | 9.8 | |
| SERATION 1810 | | | 7 | | | | 7 | | | | 9.8 |
| CWP 400 | | | | | | | | 7 | | | |

**Table 4:** Composition of hot melt adhesives with Vistamaxx 8380

| Formulation | 12 | 13 | 14 | 15 |
|---|---|---|---|---|
| Vistamaxx 8380 | 60 | 60 | 57 | 60 |

(continued)

| Formulation | 12 | 13 | 14 | 15 |
|---|---|---|---|---|
| Regalite R1090 | 30 | 30 | 28 | 30 |
| Antioxidant | 0.2 | 0.2 | 0.2 | 0.2 |
| SERATION 1830 | 9.8 | | | |
| SERATION 1820 | | 9.8 | 14.8 | |
| SERATION 1810 | | | | 9.8 |

**Table 5:** Composition of hot melt adhesives with Vistamaxx 8780

| Formulation | 16 comp. | 17 | 18 |
|---|---|---|---|
| Vistamaxx 8780 | 35 | 35 | 35 |
| Regalite R1090 | 46.5 | 46.5 | 46.5 |
| Nyflex 222B | 10.5 | 10.5 | 10.5 |
| Antioxidant | 1 | 1 | 1 |
| SASOLWAX6705 | 7 | | |
| SERATION 1820 | | 7 | |
| SERATION 1810 | | | 7 |

**Table 6:** Composition of hot melt adhesives with Koattro PB M 1500M

| Formulation | 19 | 20 | 21 | 22 |
|---|---|---|---|---|
| Koattro PB M 1500M | 65 | 65 | 62 | 65 |
| Regalite R1090 | 30 | 30 | 28 | 30 |
| Antioxidant | 0.2 | 0.2 | 0.2 | 0.2 |
| SERATION 1830 | 4.8 | | | |
| SERATION 1820 | | 4.8 | 9.8 | |
| SERATION 1810 | | | | 4.8 |

Different tests have been applied to the hot melt adhesives including odor, ageing, melt viscosity, and dynamic mechanical analysis (see all table 7).

The odor of the adhesive formulations has been tested by enclosing one gram of them in a container at 40°C for 24 hours and asked five female subjects independently from each other for the their opinion on the smell. The smell of all formulations was found to be acceptable. Aging was evaluated by heating a small sample of the formulations in an oven at 170°C with exposure to atmosphere for 72 hours and then visually checking the color. All inventive formulation showed no color change after this treatment.

The viscosity of the adhesive formulations at 140° C and 160° C was determined on a Brookfield DV-II+ Pro Extra viscometer with a Thermosel system and #27 spindle (table 7) according to ASTM D 3236 and compared to a typical SBS-adhesive formulation (Comp. 1).

Lastly a dynamic mechanical analysis of the formulations was conducted by applying parallel plate rheology measurements using an Anton Paar MCR502 rheometer with the 25 mm diameter parallel plate measuring system. For the formulations 1 to 3 a CTD 450 temperature control unit was used and the formulations were run from 170 to 60° C with a 0.1% amplitude strain and a frequency of 10 Hz at a cooling rate of 2° C/min. For the formulations 4 to 22 and Comp.1 a H-PTD 200 hood and P-PTD 200 lower plate were used and formulations were run from 170 to -30° C with a 0.015% amplitude strain and a frequency of 10 Hz at a cooling rate of 2° C/min. From these data the storage modulus (G'), loss modulus (G") and tan delta (G"/G') are calculated (see table 7). More specifically, from the data of cooling curves obtained from the experiments, the storage modulus (G'), loss modulus (G") and tan delta (G"/G') are calculated.

The cooling curves are generated and the moduli and tan delta are calculated by the *Rheoplus* software of the Anton Paar rheometer, using the *Rheomanager* tool and the provided method of the software called *Temperature ramp: Crystallisation and Melting of Polymer.*

Table 7: Analysis data of the different hot melt adhesive formulation

| Formulation | Viscosity @160° C [mPa·s] | Viscosity @140° C [mPa·s] | Increase of storage modulus (G') [MPa] within 10° C | Increase of G' [MPa] between 40 and 100° C | Temperature [° C] at which tan delta = 1 |
|---|---|---|---|---|---|
| 1 | 1390 @10 rpm | 2662 @5 rpm | 1.53 (70-60° C) | 2.81 (60-100° C) | |
| 2 | 1600 @10 rpm | 3050 @5 rpm | 655.00 (70-60° C) | 894.53 (60-100° C) | |
| 3 | 1629@10 rpm | 3145 @5 rpm | | | |
| 4 | 1517@12rpm | 2828@6rpm | 2.58 (70-60° C) | 419.80 | 49 |
| 5 | 1529@12rpm | 2878@6rpm | 541.98 (70-60° C) | 5589.67 | 66 |
| 6 | 1644@12rpm | 3003@6rpm | 75.40 (70-60° C) | 1479.43 | 67 |
| 7 | 1654@12rpm | 3117@6rpm | 149.00 (70-60° C) | 873.63 | 76 |
| 8 | 1783@12rpm | 3351@6rpm | 557.00 (70-60° C) | 4669.57 | 82 |
| 9 | 1711@12rpm | 3003@6rpm | | | |
| 10 | 1859@12rpm | 3390@6rpm | 5330.00 (70-60° C) | 22098.94 | 95 |
| 11 | 1900@12rpm | 3452@6rpm | | | |
| 12 | 3042@5rpm | 5636@4rpm | 1860.9 (70-60° C) | 9449.67 | 70 |
| 13 | 3374@6rpm | 3124@3rpm | 6830 (70-60° C) | 25999.74 | 91 |
| 14 | 2480@6rpm | 4522@5rpm | | | |
| 15 | 3496@6rpm | 6467@3rpm | 7990 (70-60° C) | 28699.45 | 94 |
| 16 | 516@20rpm | 961@20rpm | | | |
| 17 | 562 @20 rpm | 1060 @20 rpm | 3570.00 (70-60° C) | 13399.95 | 83 |
| 18 | 561 @20 rpm | 1063 @20 rpm | | | |
| 19 | 3343@6rpm | 6522@3rpm | 536.40 (70-60° C) | 3868.91 | 67 |
| 20 | 4063@5rpm | 8050@2.5rpm | 1894.00 (70-60° C) | 8429.57 | 81 |
| 21 | 3058@6rpm | 5747@4rpm | | | |
| 22 | 4157@5rpm | 8089@2.5rpm | | | |
| Comp. 1 | 1736 @12rpm | 3761 @6rpm | 1.63 (70-60° C) | 19.76 | 88 |

The inventive formulations have a Brookfield viscosity at 160° C below 5000 mPa·s. This correlates with an excellent sprayability at low temperatues, which is especially required for the application on nonwovens.

The good low temperature sprayability also correlates with a temperature at which the delta tan value (G" / G') in the dynamic mechanical analysis of the hot melt adhesive composition is equal to 1 in the range of 60° C to 100° C.

In another aspect the inventive formulations show a much steeper increase of the storage modulus (G') in the dynamic mechanical analysis compared to the formulations comprising the paraffin wax, the polyethylene wax and the formulation with a styrenic-block-copolymer-based adhesive without wax (above 10 MPa within 10° C in the storage modulus or above 500 MPa between 40 and 100° C). This results in a fast and strong forming of the bond between the substrates to which the adhesive is applied.

To test this bond formed by the hot melt adhesive composition on substrates, the adhesive formulations have been used in a summit spiral spray application method to prepare laminates of nonwoven materials. As substrate molten-blown polypropylene nonwoven fabrics have been used. The laminates were made of nonwoven/nonwoven and nonwoven/polyethylene constructions and prepared with different spray temperatures in the range of 130° C to 150° C, a coating weight of 2 g/m$^2$, 0.02 MPa nozzle air pressure and a machine speed of 40 m/min and 45 m/min for formulations 1 to 3 and 16 to 18. The T-peel strength was determined based on ASTM D 1876 with a ZwickiLine tensile tester directly after the production of the laminates. 25x150 mm samples of the laminate were pulled apart with a rate of 300mm/min at 20.3° C and 52.3% humidity and the force was measured. The values have been compared to the laminates produced with hot melt adhesive compositions comprising a paraffin wax (1, 4, 9 and 16), a polyethylene wax (formulation 8), which is not according to the invention, or a styrenic-block-copolymer-based adhesive without wax and are listed in tables 8 and 9.

Table 8: T-peel strength results directly after the coating of nonwoven/nonwoven laminates produced with the inventive hot melt adhesive formulations 2+3, 5-7, 10+11, 12-15, 17+18 and 19-22 at the given spray temperatures compared to laminates produced with an adhesive not according to the invention (1, 4, 8, 9 and 16) and with a standard styrenic-block-copolymer-based hot melt pressure sensitive adhesive supplied by Tex Year Fine Chemical (Guangzhou) Co., Ltd., Guangzhou, China without wax.

| Formulation | T-peel strength [g/inch] | Formulation | T-peel strength [g/inch] | Formulation | T-peel strength [g/inch] |
|---|---|---|---|---|---|
| 1@140° C | 58.0 | 9@140° C | 24.0 | 16@140° C | 41.3 |
| 2@140° C | 73.0 | 10@135° C | 68.0 | 17@140° C | 56.6 |
| 3@140° C | 84.6 | 11@145° C | 62.0 | 18@140° C | 62.2 |
| | | | | | |
| 4@145° C | 49.3 | 12@145° C | 92.0 | 19@140° C | 84.0 |
| 5@135° C | 82.0 | 13@145° C | 122.0 | 20@140° C | 68.0 |
| 6@145° C | 82.0 | 14@145° C | 111.0 | 21@130° C | 77.0 |
| 7@145° C | 59.9 | 15@140° C | 139.0 | 21@135° C | 83.0 |
| 8@145° C | 47.6 | | | 21@140° C | 116.0 |
| | | | | 21@145° C | 102.0 |
| SBC@160°C | 59.4 | | | 22@150° C | 92.0 |

**Table 9:** T-peel strength results directly after the coating of nonwoven/polyethylene laminates produced with the inventive hot melt adhesive formulations 5-7, 10+11, 12-15 and 19-22 at the given spray temperatures compared to laminates produced with an adhesive not according to the invention (4, 8 and 9) and with a standard styrenic-block-copolymer-based hot melt pressure sensitive adhesive supplied by Tex Year Fine Chemical (Guangzhou) Co., Ltd., Guangzhou, China without wax.

| Formulation | T-peel strength [g/inch] | Formulation | T-peel strength [g/inch] | Formulation | T-peel strength [g/inch] |
|---|---|---|---|---|---|
| 4@145° C | 84.9 | 9@140° C | 58.0 | 19@140° C | 151.0 |
| 5@135° C | 126.0 | 10@135° C | 180.0 | 20@140° C | 114.7 |
| 6@145° C | 109.0 | 11@145° C | 134.0 | 21@130° C | 138.0 |
| 7@145° C | 130.5 | | | 21@135° C | 138.0 |
| 8@145° C | 79.8 | 12@145° C | 155.0 | 21@140° C | 175.0 |
| | | 13@145° C | 151.0 | 21@145° C | 179.0 |
| | | 14@145° C | 219.0 | 22@150° C | 134.0 |
| SBC@160°C | 108.8 | 15@140° C | 151.7 | | |

From the peel strength results it can be seen that the inventive adhesive formulations show a stronger bond than the laminates adhered with the paraffin wax, polyethylene wax or styrenic-block-copolymer-based adhesive without wax.

None of the laminates produced with the inventive formulations showed color changes through bleed-through or a blocking of the adhesive. The blocking was measured by stacking three 100×100 mm samples of each laminate on top of each other in between glass plates in an oven at 50° C with a pressure of 1 kg on top of them for 24 hours. In case of the inventive formulations the three laminate samples could be removed easily and separately from in between the glass plates after this treatment.

The spray pattern was checked by staining the laminate samples in an enclosed chamber for 24 hours in the presence of iodine crystals. All samples showed a regular spiral spray pattern.

Altogether the inventive hot melt adhesive compositions show a good sprayability at low temperatures as well as a high T-peel strength, which makes them very suitable for the application in nonwoven laminates and allow to reduce the coating weight and therefore the amount of hot melt adhesive. Furthermore no smell or color deviation occur.

**Claims**

1. A polyolefin-based hot melt adhesive composition

   comprising:

   - 20 to 80 wt.-% of at least one polyolefin polymer,
   - 2 to 20 wt.-% of at least one hydrocarbon wax, and
   - optionally an antioxidant,

   wherein the hydrocarbon wax

   - has a congealing point measured according to ASTM D 938 in a range of 75 to 110° C,
   - has a heat of fusion determined with differential scanning calorimetry of 200 to 235 J/g; and
   - is a synthetic Fischer-Tropsch wax.

2. The hot melt adhesive composition according to claim 1, which has a tan delta (G" / G') in the dynamic mechanical analysis that is equal to 1 in the range of 60° C to 100° C, preferably 65° C to 85° C.

3. The hot melt adhesive composition according to any of the preceding claims, wherein the hydrocarbon wax has a molecular mass (number average) between 500 and 1200 g·mol$^{-1}$, preferably between 600 and 1000 g·mol$^{-1}$.

4. The hot melt adhesive composition according to any of the preceding claims, wherein the hydrocarbon wax has a content of branched hydrocarbons between 10 and 25 wt.-%.

5. The hot melt adhesive composition according to any of the preceding claims, wherein the hydrocarbon wax is further **characterized by** one or more of the following features:

   - a Brookfield viscosity at 135°C measured according to ASTM D 3236 with spindle 27 of below 20 mPa·s;
   - a penetration at 25° C measured according to ASTM D1321 of below 10 1/10 mm;
   - the hydrocarbon wax is hydrotreated; and
   - an oil content below 1 wt.-%.

6. The hot melt adhesive composition according to any of the preceding claims comprising the hydrocarbon wax in an amount of 2 to 18 wt.-%, preferably 2 to 15 wt.-% and more preferably 5 to 10 wt.-%.

7. The hot melt adhesive composition according to any of the preceding claims, wherein the adhesive composition is further **characterized by** one or more of the following properties:

   - a T-peel strength measured according to ASTM D 1876, which is at least 10%, preferably 20%, higher compared to the same hot melt adhesive composition without the hydrocarbon wax and/or with a hydrocarbon wax not according to the invention;
   - an increase of the storage modulus (G') in a dynamic mechanical analysis with a frequency of 10 Hz at a cooling rate of 2° C/min of more than 10 MPa, preferably more than 50 MPa, within 10° C at a point above 60° C, preferably between 70 and 60° C;
- an increase of the storage modulus (G') in a dynamic mechanical analysis with a frequency of 10 Hz at a cooling rate of 2° C/min of more than 500 MPa, between 40° C and 100° C; and
- a Brookfield viscosity at 160° C measured according to ASTM D 3236 with spindle 27 below 5000 mPa·s.

8. The hot melt adhesive composition according to any of the preceding claims, wherein the adhesive composition further comprises

    - a tackifier, preferably in an amount of 10 to 60 wt.-%, preferably 10 to 50 wt.-%, and/or
    - a processing oil, preferably in an amount of 5 to 15 wt.-%.

9. The hot melt adhesive composition according to any of the preceding claims, wherein the antioxidant is present in an amount of 0.1 to 2 wt.-%.

10. The hot melt adhesive composition according to any of the preceding claims, wherein polyolefin polymer in the adhesive composition is selected from amorphous poly-alpha-olefin copolymers (APAO), polypropylene homopolymers or polybutene homopolymers, preferably from the group of ethylene-propylene copolymers or ethylene-butene copolymers, more preferably with an ethylene-content of 0 to 50 wt.-%, preferably 5 to 37.5 wt.-%, more preferably 7 to 35 wt.-% and most preferably 10 to 25 wt.-%.

11. The hot melt adhesive composition according to claim 10, wherein the polymer is a mixture of two polymers or only one polymers and/or is present in an amount of 35 to 60 wt.-%.

12. The hot melt adhesive composition according to claim 10 or 11, wherein the polymer is further **characterized by** one or more of the following features:

    - a Brookfield viscosity at 190° C measured according to ASTM D 3236 with spindle 27 between 1000 to 50000 mPa·s, preferably 1500 to 20000 mPa·s;
    - a ring and ball softening point measured according to ASTM E 28 between 90 to 130° C;
    - a heat of fusion determined with differential scanning calorimetry according of less than 30 J/g; and
    - a density of 0.8 to 0.9 g·cm$^{-3}$.

13. A method to produce the hot melt adhesive composition according to any of claims 1 to 12 comprising mixing, in a molten state, at least one polyolefin polymer, at least one hydrocarbon wax and, optionally, any one or more of a tackifier, a processing oil and/or an antioxidant with each other in a heated mixer until they are homogenous wherein the hydrocarbon wax

    - has a congealing point measured according to ASTM D 938 in a range of 75 to 110° C,
    - has a heat of fusion determined with differential scanning calorimetry of 200 to 235 J/g; and
    - is a synthetic Fischer-Tropsch wax; and

wherein the composition comprises

    - 20 to 80 wt.-% of the at least one polyolefin polymer,
    - 2 to 20 wt.-% of the at least one hydrocarbon wax.

14. A nonwoven laminate produced using, and thus comprising, the hot melt adhesive composition according to any of the preceding claims 1 to 12.

15. The nonwoven laminate according to claim 14, wherein the laminate comprises at least one nonwoven layer or at least one nonwoven layer and one polymer layer, which preferably is made from polyethylene.

16. A method to produce a nonwoven laminate according to claim 14 or 15 comprising at least the following steps:

    - spray-coating the nonwoven layer or the polymer layer with the hot melt adhesive composition according to any of claims 1 to 12; and
    - providing at least one nonwoven or polymer layer, which is arranged on top of the coated layer, and pressing the layers together.

17. The method according to claim 16, wherein the spray-coating is performed at a temperature of 120 to 160° C, with a coating weight of between 1 to 4 g/m$^2$, a nozzle air pressure of 0.005 to 0.05 MPa and a machine speed of between 1 to 4 m/min or 4-600 m/min to obtain a coated layer.

18. The method according to claim 16 or claim 17, wherein pressing the layers together includes feeding the layers arranged on top of each other between two rollers, preferably pneumatic rollers, thus pressing the layers together.

19. The use of the hot melt adhesive composition according to any of claims 1 to 12 to adhere nonwoven laminates.

20. The use according to claim 19, wherein the nonwoven laminates have a T-peel strength which is at least 10%, preferably 20%, higher compared to the use of a same hot melt adhesive composition without the hydrocarbon wax and/or with a hydrocarbon wax not according to the invention.

**Patentansprüche**

1. Polyolefin-basierte Heißschmelzklebstoffzusammensetzung, umfassend:

   - 20 bis 80 Gew.-% mindestens eines Polyolefinpolymers,
   - 2 bis 20 Gew.-% mindestens eines Kohlenwasserstoffwachses, und
   - gegebenenfalls ein Antioxidationsmittel,

   wobei das Kohlenwasserstoffwachs

   - einen gemäß ASTM D 938 gemessenen Erstarrungspunkt in einem Bereich von 75 bis 110 °C aufweist,
   - eine mittels dynamischer Differenzkalorimetrie ermittelte Schmelzwärme von 200 bis 235 J/g aufweist; und
   - ein synthetisches Fischer-Tropsch-Wachs ist.

2. Heißschmelzklebstoffzusammensetzung gemäß Anspruch 1, welche in der dynamisch-mechanischen Analyse ein tan delta (G" / G') aufweist, welches im Bereich von 60 °C bis 100 °C, vorzugsweise 65 °C bis 85 °C, gleich 1 ist.

3. Heißschmelzklebstoffzusammensetzung gemäß einem der vorhergehenden Ansprüche, wobei das Kohlenwasserstoffwachs eine Molekularmasse (Zahlenmittel) zwischen 500 und 1200 g·mol$^{-1}$, vorzugsweise zwischen 600 und 1000 g·mol$^{-1}$ aufweist.

4. Heißschmelzklebstoffzusammensetzung gemäß einem der vorhergehenden Ansprüche, wobei das Kohlenwasserstoffwachs einen Gehalt an verzweigten Kohlenwasserstoffen zwischen 10 und 25 Gew.-% aufweist.

5. Heißschmelzklebstoffzusammensetzung gemäß einem der vorhergehenden Ansprüche, wobei das Kohlenwasserstoffwachs ferner durch eines oder mehrere der folgenden Merkmale gekennzeichnet ist:

   - eine gemäß ASTM D 3236 mit Spindel 27 gemessene Brookfield-Viskosität bei 135 °C von unter 20 mPa·s;
   - eine gemäß ASTM D1321 gemessene Penetration bei 25 °C von unter 10 1/10 mm;
   - das Kohlenwasserstoffwachs ist hydrobehandelt; und
   - einen Ölgehalt unterhalb von 1 Gew.-%.

6. Heißschmelzklebstoffzusammensetzung gemäß einem der vorhergehenden Ansprüche umfassend das Kohlenwasserstoffwachs in einem Anteil von 2 bis 18 Gew.-%, vorzugsweise 2 bis 15 Gew.-% und noch bevorzugter 5 bis 10 Gew.-%.

7. Heißschmelzklebstoffzusammensetzung gemäß einem der vorhergehenden Ansprüche, wobei die Klebstoffzusammensetzung ferner durch eine oder mehrere der folgenden Eigenschaften gekennzeichnet ist:

   - eine nach ASTM D 1876 gemessene T-Schälfestigkeit, welche im Vergleich zur gleichen Heißschmelzklebstoffzusammensetzung ohne das Kohlenwasserstoffwachs und/oder mit einem nicht erfindungsgemäßen Kohlenwasserstoffwachs mindestens 10 %, vorzugsweise 20 %, höher ist;
   - eine Zunahme des Speichermoduls (G') in einer dynamisch-mechanischen Analyse mit einer Frequenz von 10 Hz bei einer Abkühlungsrate von 2 °C/min von mehr als 10 MPa, vorzugsweise mehr als 50 MPa, innerhalb von 10 °C bei einem Punkt über 60 °C, vorzugsweise zwischen 70 und 60 °C;
- eine Zunahme des Speichermoduls (G') in einer dynamisch-mechanischen Analyse mit einer Frequenz von 10 Hz bei einer Abkühlungsrate von 2 °C/min von mehr als 500 MPa zwischen 40 °C und 100 °C; und
- eine gemäß ASTM D 3236 mit Spindel 27 gemessene Brookfield-Viskosität bei 160 °C von unter 5000 mPa·s.

8. Heißschmelzklebstoffzusammensetzung gemäß einem der vorhergehenden Ansprüche, wobei die Klebstoffzusammensetzung ferner umfasst

    - einen Tackifier, vorzugsweise in einem Anteil von 10 bis 60 Gew.-%, vorzugsweise 10 bis 50 Gew.-%, und/oder
    - ein Bearbeitungsöl, vorzugsweise in einem Anteil von 5 bis 15 Gew.-%.

9. Heißschmelzklebstoffzusammensetzung gemäß einem der vorhergehenden Ansprüche, wobei das Antioxidationsmittel in einem Anteil von 0,1 bis 2 Gew.-% vorhanden ist.

10. Heißschmelzklebstoffzusammensetzung gemäß einem der vorhergehenden Ansprüche, wobei das Polyolefinpolymer in der Klebstoffzusammensetzung ausgewählt ist aus amorphen Poly-alpha-Olefin-Copolymeren (APAO), Polypropylen-Homopolymeren oder Polybuten-Homopolymeren, vorzugsweise aus der Gruppe der Ethylen-Propylen-Copolymere oder Ethylen-Buten-Copolymere, besonders bevorzugt mit einem Ethylengehalt von 0 bis 50 Gew.-%, vorzugsweise 5 bis 37,5 Gew.-%, besonders bevorzugt 7 bis 35 Gew.-% und am bevorzugtesten 10 bis 25 Gew.-%.

11. Heißschmelzklebstoffzusammensetzung gemäß Anspruch 10, wobei das Polymer ein Gemisch aus zwei Polymeren oder nur einem Polymere ist und/oder in einem Anteil von 35 bis 60 Gew.-% vorliegt.

12. Heißschmelzklebstoffzusammensetzung gemäß Anspruch 10 oder 11, wobei das Polymer ferner durch eines oder mehrere der folgenden Merkmale gekennzeichnet ist:

    - eine gemäß ASTM D 3236 mit Spindel 27 gemessene Brookfield-Viskosität bei 190 °C zwischen 1000 und 50000 mPa·s, vorzugsweise 1500 und 20000 mPa·s;
    - einen gemäß ASTM E 28 gemessenen Ring- und Kugelerweichungspunkt zwischen 90 und 130 °C;
    - eine mittels dynamischer Differenzkalorimetrie ermittelte Schmelzwärme von weniger als 30 J/g; und
    - eine Dichte von 0,8 bis 0,9 g·cm$^{-3}$.

13. Verfahren zur Herstellung der Heißschmelzklebstoffzusammensetzung gemäß einem der Ansprüche 1 bis 12, umfassend das Mischen in geschmolzenem Zustand von mindestens einem Polyolefinpolymer, mindestens einem Kohlenwasserstoffwachs und gegebenenfalls einem oder mehreren von einem Tackifier, einem Bearbeitungsöl und/oder einem Antioxidationsmittel miteinander in einem beheizten Mischer, bis sie homogen sind, wobei das Kohlenwasserstoffwachs

    - einen gemäß ASTM D 938 gemessenen Erstarrungspunkt in einem Bereich von 75 bis 110 °C aufweist,
    - eine mittels dynamischer Differenzkalorimetrie ermittelte Schmelzwärme von 200 bis 235 J/g aufweist; und
    - ein synthetisches Fischer-Tropsch-Wachs ist; und

wobei die Zusammensetzung umfasst

    - 20 bis 80 Gew.-% des mindestens einen Polyolefinpolymers,
    - 2 bis 20 Gew.-% des mindestens einen Kohlenwasserstoffwachses.

14. Vlieslaminat, hergestellt unter Verwendung und somit umfassend die Heißschmelzklebstoffzusammensetzung gemäß einem der vorhergehenden Ansprüche 1 bis 12.

15. Vlieslaminat gemäß Anspruch 14, wobei das Laminat mindestens eine Vliesschicht oder mindestens eine Vliesschicht und eine Polymerschicht umfasst, welche vorzugsweise aus Polyethylen hergestellt ist.

16. Verfahren zur Herstellung eines Vlieslaminats gemäß Anspruch 14 oder 15, umfassend mindestens die folgenden Schritte:

    - Sprühbeschichtung der Vliesschicht oder der Polymerschicht mit der Heißschmelzklebstoffzusammensetzung gemäß einem der Ansprüche 1 bis 12; und

- Bereitstellung mindestens einer Vlies- oder Polymerschicht, welche auf der beschichteten Schicht angeordnet ist, und Zusammenpressen der Schichten.

17. Verfahren gemäß Anspruch 16, wobei die Sprühbeschichtung bei einer Temperatur von 120 bis 160 °C, einem Beschichtungsgewicht von 1 bis 4 g/m$^2$, einem Düsenluftdruck von 0,005 bis 0,05 MPa und einer Maschingeschwindigkeit von 1 bis 4 m/min oder 4-600 m/min durchgeführt wird, um eine beschichtete Schicht zu erhalten.

18. Verfahren gemäß Anspruch 16 oder Anspruch 17, bei dem das Zusammenpressen der Schichten das Zuführen der übereinander angeordneten Schichten zwischen zwei Walzen, vorzugsweise pneumatischen Walzen, umfasst, wodurch die Schichten zusammengepresst werden.

19. Verwendung der Heißschmelzklebstoffzusammensetzung gemäß einem der Ansprüche 1 bis 12 zum Verkleben von Vlieslaminaten.

20. Verwendung gemäß Anspruch 19, wobei die Vlieslaminate eine T-Schälfestigkeit aufweisen, die mindestens 10 %, vorzugsweise 20 %, höher ist im Vergleich zur Verwendung einer gleichen Heißschmelzklebstoffzusammensetzung ohne das Kohlenwasserstoffwachs und/oder mit einem nicht erfindungsgemäßen Kohlenwasserstoffwachs.

## Revendications

1. Composition adhésive thermofusible à base de polyoléfine comprenant :

   - 20 à 80 % en masse d'au moins un polymère de polyoléfine,
   - 2 à 20 % en masse d'au moins une cire hydrocarbonée, et
   - éventuellement un antioxydant,

   dans laquelle la cire hydrocarbonée

   - présente un point de solidification mesuré selon ASTM D938 dans un intervalle de 75 à 110°C,
   - présente une chaleur de fusion déterminée avec une calorimétrie différentielle à balayage de 200 à 235 J/g ; et
   - est une cire Fischer-Tropsch synthétique.

2. Composition adhésive thermofusible selon la revendication 1, qui présente un tan delta (G"/G') dans l'analyse mécanique dynamique qui est égal à 1 dans l'intervalle de 60°C à 100°C, de préférence 65°C à 85°C.

3. Composition adhésive thermofusible selon l'une quelconque des revendications précédentes, dans laquelle la cire hydrocarbonée présente une masse moléculaire (moyenne en nombre) de 500 à 1 200 g.mole$^{-1}$, de préférence de 600 à 1 000 g.mole$^{-1}$.

4. Composition adhésive thermofusible selon l'une quelconque des revendications précédentes, dans laquelle la cire hydrocarbonée présente une teneur en hydrocarbures ramifiés de 10 à 25 % en masse.

5. Composition adhésive thermofusible selon l'une quelconque des revendications précédentes, dans laquelle la cire hydrocarbonée est de plus **caractérisée par** une ou plusieurs des caractéristiques suivantes :

   - une viscosité Brookfield à 135°C mesurée selon ASTM D 3236 avec une broche 27 inférieure à 20 mPa.s ;
   - une pénétration à 25°C mesurée selon ASTM D1321 inférieure à 10 1/10 mm ;
   - la cire hydrocarbonée est hydrotraitée ; et
   - une teneur en huile inférieure à 1 % en masse.

6. Composition adhésive thermofusible selon l'une quelconque des revendications précédentes comprenant la cire hydrocarbonée dans une quantité de 2 à 18 % en masse, de préférence 2 à 15 % en masse et encore mieux 5 à 10 % en masse.

7. Composition adhésive thermofusible selon l'une quelconque des revendications précédentes, dans laquelle la composition adhésive est de plus **caractérisée par** une ou plusieurs des propriétés suivantes :

**EP 3 847 221 B1**

- une résistance au pelage en T mesurée selon ASTM D 1876, qui est au moins 10 %, de préférence 20 %, supérieure comparée à la même composition adhésive thermofusible sans la cire hydrocarbonée et/ou avec une cire hydrocarbonée n'étant pas de l'invention ;
- une augmentation du module de stockage (G') dans une analyse mécanique dynamique avec une fréquence de 10 Hz à une température de refroidissement de 2°C/min supérieure à 10 MPa, de préférence supérieure à 50 mPa, dans les 10°C en un point supérieur à 60°C, de préférence de 70 à 60°C ;
- une augmentation du module de stockage (G') dans une analyse mécanique dynamique avec une fréquence de 10 Hz à une vitesse de refroidissement de 2°C/min supérieure à 500 MPa, entre 40°C et 100°C ; et
- une viscosité Brookfield à 160°C mesurée selon ASTM D 3236 avec une broche 27 inférieure à 5 000 MPa.s.

8. Composition adhésive thermofusible selon l'une quelconque des revendications précédentes, dans laquelle la composition adhésive comprend de plus

   - un agent collant, de préférence dans une quantité de 10 à 60 % en masse, de préférence de 10 à 50 % en masse, et/ou
   - une huile plastifiante, de préférence dans une quantité de 5 à 15 % en masse.

9. Composition adhésive thermofusible selon l'une quelconque des revendications précédentes, dans laquelle l'antioxydant est présent dans une quantité de 0,1 à 2 % en masse.

10. Composition adhésive thermofusible selon l'une quelconque des revendications précédentes, dans laquelle un polymère de polyoléfine dans la composition adhésive est choisi parmi des copolymères de polyoléfine-alpha amorphes (APAO), des homopolymères de polypropylène ou homopolymères de polybutène, de préférence du groupe de copolymères d'éthylène-propylène ou copolymères d'éthylène-butène, encore mieux avec une teneur en éthylène de 0 à 50 % en masse, de préférence de 5 à 37,5 % en masse, encore mieux de 7 à 35 % en masse et bien mieux encore de 10 à 25 % en masse.

11. Composition adhésive thermofusible selon la revendication 10, dans laquelle le polymère est un mélange de deux polymères ou uniquement un polymère et/ou est présent dans une quantité de 35 à 60 % en masse.

12. Composition adhésive thermofusible selon la revendication 10 ou 11, dans laquelle le polymère est de plus **caractérisé par** une ou plusieurs des caractéristiques suivantes :

    - une viscosité Brookfield à 190°C mesurée selon ASTM D 3236 avec une broche 27 de 1 000 à 50 000 MPa.s, de préférence 1 500 à 20 000 MPa.s ;
    - un point de ramollissement par la méthode bille et anneau mesuré selon ASTM E 28 de 90 à 130°C ;
    - une chaleur de fusion déterminée par calorimétrie différentielle à balayage inférieure à 30 J/g ; et
    - une densité de 0,8 à 0,9 g.cm$^{-3}$.

13. Procédé pour la production de la composition adhésive thermofusible selon l'une quelconque des revendications 1 à 12 comprenant le mélange, à l'état fondu, d'au moins un polymère de polyoléfine, d'au moins une cire hydrocarbonée et, éventuellement, d'un ou plusieurs d'un agent collant, d'une huile plastifiante et/ou d'un antioxydant les uns avec les autres dans un mélangeur chauffé jusqu'à ce qu'il soit homogène dans lequel la cire hydrocarbonée

    - présente un point de solidification mesuré selon ASTM D 938 dans un intervalle de 75 à 110°C,
    - présente une chaleur de fusion déterminée par calorimétrie différentielle à balayage de 200 à 235 J/g ; et
    - est une cire Fischer-Tropsch synthétique ; et

    dans lequel la composition comprend

    - 20 à 80 % en masse du au moins un polymère de polyoléfine,
    - 2 à 20 % en masse de la au moins une cire hydrocarbonée.

14. Stratifié non tissé produit en utilisant, et comprenant ainsi, la composition adhésive thermofusible selon l'une quelconque des revendications 1 à 12.

15. Stratifié non tissé selon la revendication 14, dans lequel le stratifié comprend au moins une couche non tissée ou au moins une couche non tissée et une couche de polymère, laquelle est de préférence constituée de polyéthylène.

**16.** Procédé de production d'un stratifié non tissé selon la revendication 14 ou 15 comprenant au moins les étapes suivantes :

- dépôt par pulvérisation de la couche non tissée ou la couche de polymère avec la composition adhésive thermofusible selon l'une quelconque des revendications 1 à 12 ; et
- fourniture d'au moins une couche non tissée ou de polymère, qui est disposée sur le haut de la couche déposée, et pression des couches ensemble.

**17.** Procédé selon la revendication 16, dans lequel le dépôt par pulvérisation est réalisé à une température de 120 à 160°C, avec une masse de revêtement de 1 à 4 g/m$^2$, une pression d'air de buse de 0,005 à 0,05 MPa et une vitesse de machine de 1 à 4 m/min ou 4-600 m/min pour obtenir une couche déposée.

**18.** Procédé selon la revendication 16 ou revendication 17, dans lequel la pression des couches ensemble incluent l'introduction des couches disposées les unes sur le haut des autres entre deux rouleaux, de préférence des rouleaux pneumatiques, pressant ainsi les couches ensemble.

**19.** Utilisation de la composition adhésive thermofusible selon l'une quelconque des revendications 1 à 12 pour faire adhérer les stratifiés non tissés.

**20.** Utilisation selon la revendication 19, dans laquelle les stratifiés non tissés présentent une résistance au pelage en T qui est au moins 10 %, de préférence 20 %, supérieure comparée à l'utilisation de la même composition adhésive thermofusible sans la cire hydrocarbonée et/ou avec une cire hydrocarbonée n'étant pas de l'invention.

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080081868 A
- US 8431642 B
- US 20150225622 A
- US 9334431 B
- WO 2016153663 A
- US 20160130480 A
- US 20180002578 A